Europäisches Patentamt

European Patent Office

Office européen des brevets

(11) Veröffentlichungsnummer: **0 622 608 A1**

# EUROPÄISCHE PATENTANMELDUNG

(21) Anmeldenummer: **94106549.2**

(51) Int. Cl.⁵: **G01B 7/34**, G01N 27/00

(22) Anmeldetag: **27.04.94**

(30) Priorität: **30.04.93 DE 4314301**

(43) Veröffentlichungstag der Anmeldung:
**02.11.94 Patentblatt 94/44**

(84) Benannte Vertragsstaaten:
**CH DE FR LI NL**

(71) Anmelder: **IMM INSTITUT FÜR MIKROTECHNIK GmbH**
**Carl-Zeiss-Strasse 18-20**
**D-55129 Mainz-Hechtsheim (DE)**

(72) Erfinder: **Ruf, Alexander**
**Holunderweg 33**
**D-55128 Mainz (DE)**
Erfinder: **Abraham, Michael, Dr.**
**Am Kühlborn 5**
**D-55129 Mainz (DE)**
Erfinder: **Dietrich, Thomas R., Dr.**
**Bernardstrasse 85**
**D-63067 Offenbach (DE)**
Erfinder: **Lacher, Manfred**
**Kästrich 53**
**D-55116 Mainz (DE)**

(74) Vertreter: **Dr. Fuchs, Dr. Luderschmidt Dr. Mehler, Dipl.-Ing. Weiss Patentanwälte**
**Abraham-Lincoln-Strasse 7**
**D-65189 Wiesbaden (DE)**

(54) **Abtastvorrichtung zur Untersuchung von Oberflächenstrukturen mit Auflösung im submicron-Bereich und Verfahren zu deren Herstellung.**

(57) Es wird eine Abtastvorrichtung beschrieben, die sich in der Massenfertigung herstellen läßt und deren Sensorspitze sich durch große Stabilität, große Länge und großes Aspektverhältnis auszeichnet. Zumindest die Sensorspitze (1) besteht aus photostrukturierbarem Glas. Es können auch der Mikroskopbalken und das Halteelement einstückig aus photostrukturierbarem Glas hergestellt werden. Bei der Herstellung wird von einem Plättchen aus strukturierbarem Glas mit einer Dicke größer oder gleich L einer Sensorspitze ausgegangen und anschließend eine Photostrukturierung und ein Ätzvorgang angeschlossen, wobei die Ätzrate auf das gewünschte Aspektverhältnis der fertigen Sensorspitze eingestellt wird.

Fig. 4e

Die Erfindung betrifft eine Abtastvorrichtung nach dem Oberbegriff des Anspruchs 1 sowie ein Verfahren zur Herstellung solcher Abtastvorrichtungen.

Derartige Abtastvorrichtungen werden für die Abtastung und Untersuchung von Oberflächen mit Auflösung im submicron-Bereich eingesetzt.

Hierzu zählt u.a. die Rasterkraftmikroskopie (AFM), die zu den empfindlichsten Arten der Oberflächenprofilometrie zählt (Dror Sarid "Scanning Force Mircroscopy", Oxford University Press 1991). Die Rasterkraftmikroskopie gestattet es, atomare Korrugationen von Festkörperoberflächen abzubilden. Die zentrale Komponente des Abtastsystems ist der Kraftmikroskopbalken, der aus einem Federbalken besteht, der auf der einen Seite an einem Halteelement fest eingespannt ist und am anderen freien Ende eine senkrecht zur Balkenachse angeordnete Sensorspitze trägt, mit der die Oberfläche abgetastet wird. Die dabei auftretenden Auslenkungen des Kraftmikroskopbalkens werden mit geeigneten Methoden nachgewiesen.

Hierzu zählen optische Methoden wie das Lichtzeigerprinzip und das interferometrische Prinzip. Die Kraftmikroskopbalken müssen eine kleine Federkonstante aufweisen, damit bei gegebener Kraft eine maximale Auslenkung erzielt wird. Dabei wird im Kontakt zur Probenoberfläche gearbeitet. Für die Abbildung atomarer Korrugationen sind Auflagekräfte in der Größenordnung von $10^{-8}$ bis $10^{-10}$ N erforderlich. Daraus ergeben sich Federkonstanten in der Größenordnung von 0,01 bis 1 N/m. Andererseits soll der Kraftmikroskopbalken eine hohe Resonanzfrequenz (einige kHz) aufweisen, damit das System möglichst wenig durch äußere Störungen beeinflußt wird und eine schnelle Regelung möglich wird. Diese Anforderungen werden nur durch sehr kleine Kraftmikroskopbalken erfüllt. Die heute kommerziell erhältlichen Kraftmikroskopbalken werden mit mikromechanischen Methoden hergestellt. Diese Balken eignen sich sehr gut für die Abtastung relativ ebener Probenoberflächen.

Eine andere Art der Kraftmikroskopie nutzt anziehende Kräfte aus, z.B. van der Waals- oder magnetische Kräfte. Die Sensorspitze befindet sich dabei nicht mehr in direktem Kontakt mit der Probenoberfläche. Die Messung des Oberflächenprofils erfolgt nach folgendem Prinzip:

Der Kraftmikroskopbalken wird in Resonanzschwingungen versetzt und durch die Wechselwirkung mit der Probe verschiebt sich die Resonanzfrequenz. Der Nachweis erfolgt mit der Lock-in Technik. Für die Anwendung dieser "non contact"-Technik benötigt man Kraftmikroskopbalken, die eine hohe Resonanzfrequenz aufweisen, da die Auflösung mit der Resonanzfrequenz steigt. Weiterhin wird die Auflösung wegen des großen Arbeitsabstandes wesentlich durch die Form der Spitzen bestimmt.

Als Kraftmikroskopbalken sind solche aus Siliziumnitrid mit integrierten pyramidalen Spitzen bekannt, die mit Hilfe mikromechanischer Verfahren hergestellt werden. Die Sensorspitze entsteht durch Abscheidung von Siliziumnitrid auf (100)-Silizium, in dem vorher durch anisotropes Ätzen eine pyramidale Vertiefung erzeugt wurde (R. Albrecht, S. Akamine, T.E. Carver, C. Quate, "Microfabrication of cantilever styli for the atomic force microscopy", J. Vac. Sci. Technol. A 8(4) (1990) 3386). Die Sensorspitze hat jedoch nur ein Aspektverhältnis von ca. 1:1. Diese Sensoren eignen sich sehr gut für die Abbildung von schwach korrugierten Proben. Besonders auf dem Feld technischer Oberflächen hat man es jedoch mit rauhen, stark zerklüfteten Oberflächen zu tun. Bei der Untersuchung derart rauher Oberflächen entstehen beim Abtasten starke Artefakte, weil die Spitze dann nicht in tiefe Gräben eintauchen kann, wodurch das Ergebnis der Untersuchung verfälscht wird.

Zudem sind diese Kraftmikroskopbalken wegen ihrer Form und ihres geringen Aspektverhältnisses für die "non-contact Technik" ungeeignet.

Aus diesen Gründen wurden Siliziumbalken mit ultradünnen Spitzen entwickelt (EP 0413040 A1). Bei diesem Verfahren werden die Spitzen ebenso wie die Balken aus einem Siliziumstück durch Anwendung von Naß- und Trockenätzverfahren gefertigt. Die Sensorspitze besitzt ein höheres Aspektverhältnis, das bei ca. 3:1 liegt. Die Länge der Spitze ist jedoch auf ca. 20 $\mu$m begrenzt, so daß tiefere Strukturen ebenfalls nicht untersucht werden können. Ein wichtiges Anwendungsfeld dieser Siliziumbalken ist auch die "non-contact" Kraftmikroskopie. Dazu werden die Spitzen im Hinblick auf eine höhere Resonanzfrequenz dimensioniert.

Wesentlich schlankere Sensorspitzen im Labormaßstab wurden durch Elektronenstrahl-Abscheidungstechnik (EBD-tips) erzeugt (Y. Akima, E. Nishimura, A. Sakai "Scanning tunneling microscopy for measuring surface topography", J. Vac. Sci Technol. A (1)(1990) 429). Dabei wird in einem Rasterelektronenmikroskop mit dem Elektronenstrahl in einer geeigneten Atmosphäre eine lange nadelförmige Spitze am Ende des Kraftmikroskopbalkens erzeugt. Dieses Verfahren hat jedoch den Nachteil, daß die Sensorspitzen sehr spröde sind und beim Abtasten tiefer Strukturen abbrechen können. Weiterhin ist der Herstellungsprozeß nicht für die Massenfertigung geeignet.

Sensorspitzen auf der Basis von ZnO-Whiskern (H. Kado, K. Yokoyama, T. Tohda "Atomic force microscopy using ZnO whisker tip", Rev. Sci. Instrum. 63(6) (1992), 3330) sind ebenfalls bekannt. Auch dieses Verfahren ist nicht für eine Massenfertigung geeignet, da die Whisker nach der Züchtung einzeln auf die vorgefertigen Balken geklebt werden müssen.

Aufgabe der Erfindung ist daher eine Abtastvorrichtung zur Untersuchung von Oberflächenstrukturen, dessen Sensorspitze ein hohes Aspektverhältnis besitzt und daher zum Abtasten zerklüfteter Strukturen und tiefer Gräben geeignet ist und eine große Stabilität aufweist, wobei die Abtastvorrichtung auch für die Massenproduktion geeignet sein soll. Es ist auch Aufgabe der Erfindung, ein Verfahren zur Herstellung einer solchen Abtastvorrichtung bereitzustellen.

Diese Aufgabe wird mit einer Abtastvorrichtung gemäß Anspruch 1 gelöst. Gegenstand des Verfahrens ist der Patentanspruch 10. Vorteilhafte Ausgestaltungen sind Gegenstand der Unteransprüche.

Es hat sich herausgestellt, daß Sensorspitzen aus photostrukturierbarem Glas sich durch außerordentlich hohe Stabilität auszeichnen. Dies erleichtert einerseits die Handhabung solcher Sensorspitzen, da bei der Aufbewahrung und beim Einbau der Sensorspitzen keine besonderen Vorsichtsmaßnahmen ergriffen werden müssen. Beim Abtasten stark zerklüfteter Oberflächen brechen die Sensorspitzen weitaus seltener ab, als dies bei den Sensorspitzen gemäß dem Stand der Technik der Fall ist. Insofern ist auch die Lebensdauer der Sensorspitzen entsprechend größer.

Ein weiterer Vorteil beteht darin, daß die Sensorspitzen dünner und länger ausgebildet werden können als die bekannten Sensorspitzen, wobei dies nicht zu Lasten der Stabilität der Sensorspitze geht. Die Länge der Sensorspitze kann bis zu 500 $\mu$m betragen, wobei das Aspektverhältnis bei bis zu 10:1 liegen kann. Es ist dadurch möglich, auch Strukturen mit großen und eng ausgebildeten Vertiefungen mit einer entsprechend großen Auflösung zu untersuchen, ohne daß eine Beschädigung der Sensorspitze auftritt.

Bei der Verwendung von Sensorspitzen aus photostrukturierbarem Glas hat es sich als vorteilhaft herausgestellt, wenn nicht nur die Sensorspitze sondern zumindest auch der Mikroskopbalken ebenfalls aus photostrukturierbarem Glas besteht. Vorzugsweise ist die Sensorspitze und der Mikroskopbalken einstückig ausgebildet.

Ein Mikroskopbalken mit beispielsweise der Länge von 1,5 mm, der Breite 20 $\mu$m und der Dicke 20 $\mu$m und einem Elastizitätsmodul von 8 - $10^{10}$ N/m$^2$ besitzt eine Resonanzfrequenz von 25 kHz sowie eine Federkonstante von 1 N/m. Mit diesen Werten ist der Mikroskopbalken für die Anwendung in der Kraftmikroskopie gut geeignet.

Es ist auch möglich, den Mikroskopbalken aus Siliziumnitrid zu fertigen und somit die vorteilhaften Eigenschaften des Siliziumnitrids mit denen der Sensorspitze aus photostrukturierbarem Glas zu verbinden.

Da der Mikroskopbalken zur Handhabung mit einem entsprechenden Halteelement verbunden ist, was durch Bonden oder Kleben erfolgen kann, ist es insbesondere im Hinblick auf die Herstellung vorteilhaft, wenn auch das Halteelement aus photostrukturierbarem Glas besteht. Vorteilhafterweise sind die Sensorspitze, der Mikroskopbalken und das Halteelement einstückig ausgebildet.

Wenn die Auslenkungen des Mikroskopbalkens mittels optischer Methoden nachgewiesen werden sollen, ist es empfehlenswert, daß die Rückseite des Mikroskopbalkens mit einer reflektierenden Beschichtung versehen ist.

Das Herstellungsverfahren einer solchen Abtastvorrichtung basiert auf der bekannten Bearbeitung photostrukturierbarer Gläser. Zu solchen Gläsern zählt beispielsweise ein Glas, das unter dem Warenzeichen FOTURAN von der Fa. Schott Glaswerke, Mainz hergestellt wird.

Photostrukturierbares Glas wird selektiv mit ultraviolettem Licht, z.B. dem Licht einer Quecksilberhochdrucklampe belichtet, woraufhin im Glas Kristallisationskeime entstehen. Durch einen Temperprozess kann das Glas um diese Keime herum auskristallisieren, so daß die belichteten und auskristallisierten Bereiche schneller geätzt werden können als die unbelichteten.

Aufgrund des unterschiedlichen Ätzverhaltens der belichteten und unbelichteten Bereiche kann das hohe Aspektverhältnis der fertigen Sensorspitze erzeugt werden. Die Ätzrate kann auch durch die Dauer der Belichtung sowie die Konzentration des Ätzmittels beeinflußt werden, so daß verschiedene Aspektverhältnisse bis zu 20:1 eingestellt werden können.

Sensorspitzen aus photostrukturierbarem Glas haben den Vorteil, daß sie auch in der optischen Nahfeldmikroskopie eingesetzt werden können. Dafür ist die Transparenz und die gute optische Qualität der Oberfläche der Spitze erforderlich. Das wird dadurch gewährleistet, daß der Bereich der Spitze bei der Belichtung abgeschattet ist und deshalb beim Tempern nicht auskristallisiert und dadurch die Spitze eintrübt und die Oberfläche aufrauht. Die optische Strahlung wird in der Spitze durch Ausnutzung des Effekts der Totalreflexion wie in einem Wellenleiter bis an das Ende der Spitze geführt und tritt dort über das evaneszente Feld mit der Probenoberfläche in Wechselwirkung. Die Sensorspitze kann auch in einem kombinierten Kraftmikroskop/optischen Nahfeldmikroskop als Sensorspitze benutzt werden.

Es wird von einem Plättchen aus photostrukturierbarem Glas ausgegangen, dessen Dicke zumindest größer als die Länge der auszubildenden Sensorspitze ist. Das Plättchen wird mit geeigneten Masken, die rund oder rechteckig ausgebildet sein können, je nachdem, ob man kegelstumpfförmige oder pyramidenförmige Sensorspitzen erhalten will, an vorgegebenen Stellen abgedeckt. Anschließend wird das photostrukturierbare Glas in den nicht abgedeckten Bereichen belichtet und das gesamte photostrukturierbare Glas getempert. Der belichtete Bereich wird anschließend geätzt, wobei zumindest die Sensorspitze bzw. die Sensorspitzen ausgebildet werden. Da die Spitzen alleine nicht leicht handhabbar sind, wird man vorzugsweise das Plättchen vor der Photostrukturierung auf einem geeigneten Substrat befestigen.

Es ist daher vorteilhaft, anstelle des Substrates sogleich den Mikroskopbalken vorzusehen, der auch in den Fertigungsprozess einbezogen werden kann.

Wenn auch der Mikroskopbalken, an dessen Ende die Sensorspitze vorgesehen ist, aus photostrukturierbarem Glas hergestellt wird, wird zunächst das Plättchen mit einem geeigneten Halteelement, wie es in Kraftmikroskopen Verwendung findet, derart verbunden, daß das Plättchen gegenüber dem Halteelement mindestens um die Länge eines auszubildenden Mikroskopbalkens vorsteht. Es ist damit möglich, in diesem vorstehenden Bereich einen oder mehrere Mikroskopbalken auszubilden, wobei durch Photostrukturierung, Tempern und Ätzen der Mikroskopbalken zunächst mit der gewünschten Breite in diesem freiliegenden Bereich des Plättchens hergestellt wird. An diesen als erste Strukturierung bezeichneten Verfahrensschritt schließt sich dann die Ausbildung der Sensorspitze an, die ebenfalls durch Photostrukturierung, Tempern und Ätzen durchgeführt wird, wobei auch gleichzeitig die Balkenhöhe entsprechend ausgebildet wird. Dieser Vorgang wird als zweite Strukturierung bezeichnet.

Das Plättchen wird mit dem Halteelement vor der Photostrukturierung vorzugsweise durch Bonden oder Kleben verbunden.

Je nach Größe des Glasplättchens können gleichzeitig mehrere Balken mit gleicher oder unterschiedlicher Geometrie gefertigt werden. Es wird daher vorzugsweise ein Halteelement mit vorgegebenen Trennlinien verwendet, so daß nach Abschluß der Photostrukturierung das Halteelement mit den daran ausgebildeten Mikroskopbalken und Sensorspitzen in mehrere Abtastvorrichtungen aufgetrennt werden kann.

Die Massenfertigung kann weiter vereinfacht und beschleunigt werden, wenn auf das Verbinden des Halteelementes mit dem Plättchen aus photostrukturierbarem Glas verzichtet werden kann. Es wird daher gemäß einer weiteren Ausführungsform die monolithische Herstellung von Halteelement, Mikroskopbalken und Sensorspitze vorgeschlagen. Hierzu wird ein Plättchen aus photostrukturierbarem Glas mit einer Dicke > = der Dicke des Halteelementes plus Sensorspitze verwendet, wobei durch Photostrukturierung, Tempern und Ätzen zunächst der oder die Mikroskopbalken hergestellt werden. In einem weiteren Verfahrensschritt wird nach Abdecken des Halteelementes der Ätzvorgang fortgeführt, wobei dieser lediglich auf den Mikroskopbalken beschränkt wird, dessen Höhe und Breite durch den Ätzvorgang verringert wird. In einem letzten Verfahrensschritt wird dann wie bereits beschrieben, durch Photostrukturierung, Tempern und Ätzen die Sensorspitze am freien Ende des Mikroskopbalkens ausgebildet. Hierbei wird auch gleichzeitig die Dicke der Balken und des Halteelementes verringert.

Auch bei dieser Herstellung ist es möglich, große Halteelemente mit einer entsprechend großen Anzahl von Mikroskopbalken gleichzeitig zu fertigen, wobei nach Beendigung der Photostrukturierung die Halteelemente durch geeignete Verfahren vorzugsweise zwischen den Mikroskopbalken durchtrennt werden.

Der Ätzschritt zur Verringerung von Höhe und Breite des Mikroskopbalkens verläuft wesentlich langsamer als im belichteten und getemperten Glas. Dieser Vorgang hat jedoch den Vorteil, daß die so erzeugte spätere Rückseite der Balken sehr glatt wird, was im Hinblick auf die optische Qualität des Mikroskopbalkens von Bedeutung ist.

Wenn für bestimmte Anwendungszwecke der Mikroskopbalken aus Siliziumnitrid, $SiO_2$ oder SiC gefertigt werden soll, wird ein Plättchen aus photostrukturierbarem Glas zunächst auf einer Seite mit einer Siliziumnitridschicht in Form eines oder mehrerer Balken versehen, die die Dicke des gewünschten Mikroskopbalkens aufweist. Da die Dicke des Mikroskopbalkens mit der Federkonstante in Beziehung steht, kann durch die Dicke der Abscheidung diese Federkonstante eingestellt werden. Danach wird auf die freie Fläche der Siliziumnitridschicht das Halteelement aufgebracht, das aus beliebigen Materialien bestehen kann. Durch Photostrukturierung, Tempern und Ätzen wird dann in einem letzten Verfahrensschritt von der der Siliziumnitridschicht abgewandten Seite des Glasplättchens die Sensorspitze gefertigt. Der Ätzvorgang wird solange fortgeführt, bis die Siliziumnitridschicht erreicht ist. Diese wirkt dabei als Ätzstop, so daß automatisch der Siliziumnitridbalken mit der Glasspitze übrigbleibt.

Nach Abschluß der Fertigung von Balken und Spitzen sowie ggfs. des Halteelementes kann sich noch ein weiterer Verfahrensschritt anschließen, in dem die Rückseite des Mikroskopbalkens mit einer reflektierenden Beschichtung versehen wird.

Vorteilhafte Ausgestaltungen der Erfindung werden nachfolgend anhand der Zeichnungen näher erläutert.

Es zeigen:

Figuren 1a - 1c

die Verfahrensschritte zur Herstellung von Sensorspitzen,

Figur 2

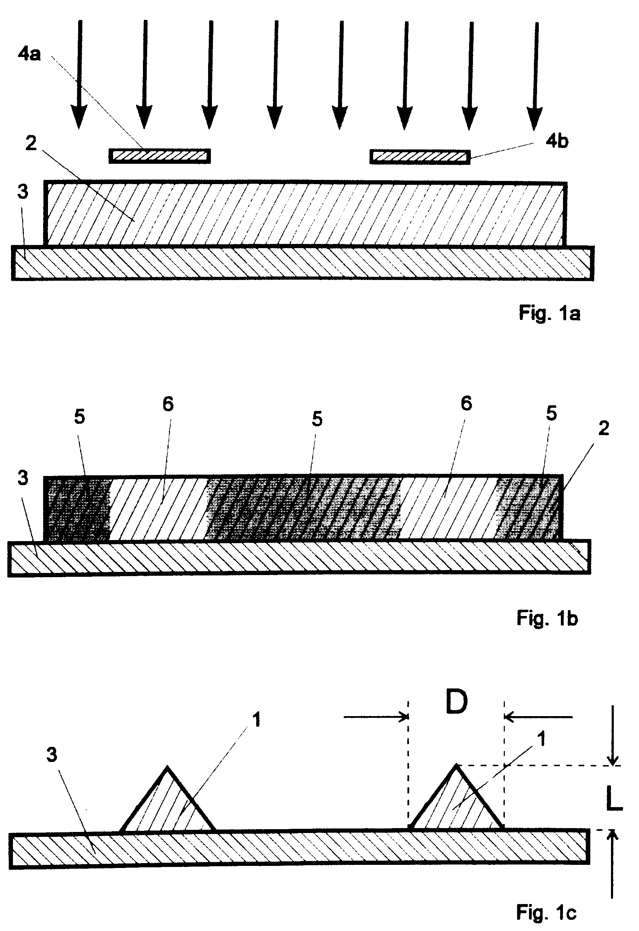

die Draufsicht auf das in Figur 1a gezeigte Plättchen aus photostrukturierbarem Glas,

Figuren 3a - 3e

Verfahrensschritte zu Herstellung von Mikroskopbalken und Sensorspitzen aus photostrukturierbarem Glas,

Figuren 4a - 4e

Verfahrensschritte zur monolitischen Herstellung von Haltelement, Mikroskopbalken und Sensorspitze und

Figuren 5a und 5b

Verfahrensschritte zur Herstellung einer Abtastvorrichtung mit einem Mikroskopbalken aus Siliziumnitrid.

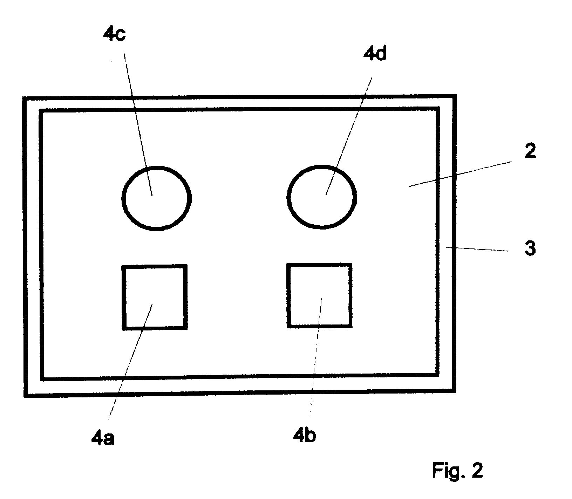

In der Figur 1 ist auf einem Substrat 3 ein Plättchen aus photostrukturierbarem Glas 2 aufgebracht, das an vorgegebenen Stellen mit Strukturen 4a und 4b auf einer Maske abgedeckt ist. Wie in der Draufsicht der Figur 2 zu sehen ist, können diese Maskenstrukturen rund (4c, 4d) oder rechteckig, insbesondere quadratisch (4a, 4b) sein.

Nach dem Abdecken des photostrukturierbaren Glases wird die Belichtung beispielsweise mittels UV-Licht einer Quecksilberdampflampe vorgenommen, was durch die eingezeichneten Pfeile verdeutlicht wird.

In der Figur 1b sind die belichteten Bereiche 5 und die unbelichteten Bereiche 6 dargestellt, die anschließend dem Ätzvorgang unterworfen werden. Durch Einstellung der Ätzrate lassen sich in den unbelichteten Bereichen 6 gezielt die Sensorspitzen 1 mit einem gewünschten Aspektverhältnis L/D herstellen.

Im nachfolgenden Beispiel wird ein typisches Verfahren zur Herstellung einer Sensorspitze beschrieben.

Zuerst wird das auf ein Substrat aufgebrachte photostrukturierbare Glas durch eine Chrommaske mit UV-Licht belichtet. Dabei sind die Stellen, aus denen später die Spitzen gefertigt werden sollen durch Chrom-Strukturen auf der Maske abgeschattet. Die belichteten Flächen kristallisieren in einer mehrstündigen Wärmebehandlung bei etwa 600°C aus. Bei dem nachfolgenden Ätzprozeß in verdünnter Flußsäure werden diese kristallisierten Bereiche herausgelöst.

Bei einem Ätzratenverhältnis zwischen unbestrahlten und bestrahlten Bereichen von z.B. 1:20 können Spitzen mit einem Aspektverhältnis (s. Fig. 1c) von $D/L = 1/10$ erreicht werden. Die absolute Länge L der Spitze hängt dabei von der Dicke des Glases und der Größe der Strukturen auf der Maske ab. Für eine Länge von 300 $\mu$m muß die Dicke des Glases >300 $\mu$m und die Maskierung eine Breite oder Durchmesser von 30 $\mu$m haben.

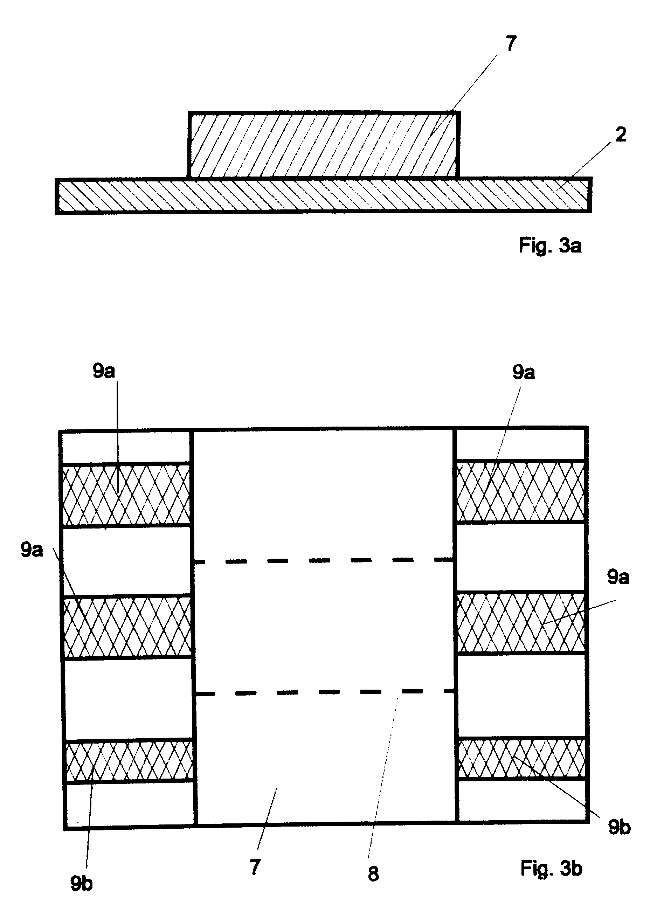

In den Figuren 3a bis 3e werden die einzelnen Verfahrensschritte zur Herstellung einer Abtastvorrichtung mit Mikroskopbalken und Sensorspitze aus photostrukturierbarem Glas dargestellt. Zunächst wird auf einem Plättchen aus photostrukturierbarem Glas 2 ein Halteelement 7 durch Bonden oder Kleben befestigt. Wie in der Figur 3a dargestellt ist, steht das Plättchen gegenüber der Halterung 7 auf beiden Seiten um einen bestimmten Betrag vor, der z.B. der Länge der auszubildenden Mikroskopbalken entspricht.

In der Figur 3b ist die Draufsicht der in der Figur 3a gezeigten Anordnung dargestellt, wobei auf der Oberseite des Glasplättchens 2 in der gegenüber dem Halteelement vorstehenden Bereichen Maskenstrukturen 9a und 9b auf die Oberfläche projiziert werden, deren Breite der Breite der auszubildenden Mikroskopbalken entspricht. In der hier gezeigten Ausführungsform werden insgesamt sechs Mikroskopbalken hergestellt, wobei unterschiedliche Breiten durch die Wahl der Maskenstrukturen 9a und 9b gefertigt werden können. Das Halteelement 7 besitzt mehrere Trennlinien 8, an denen nach Beendigung der Herstellung das Halteelement 7 durchtrennt werden kann, so daß insgesamt drei Abtastvorrichtungen erhalten werden.

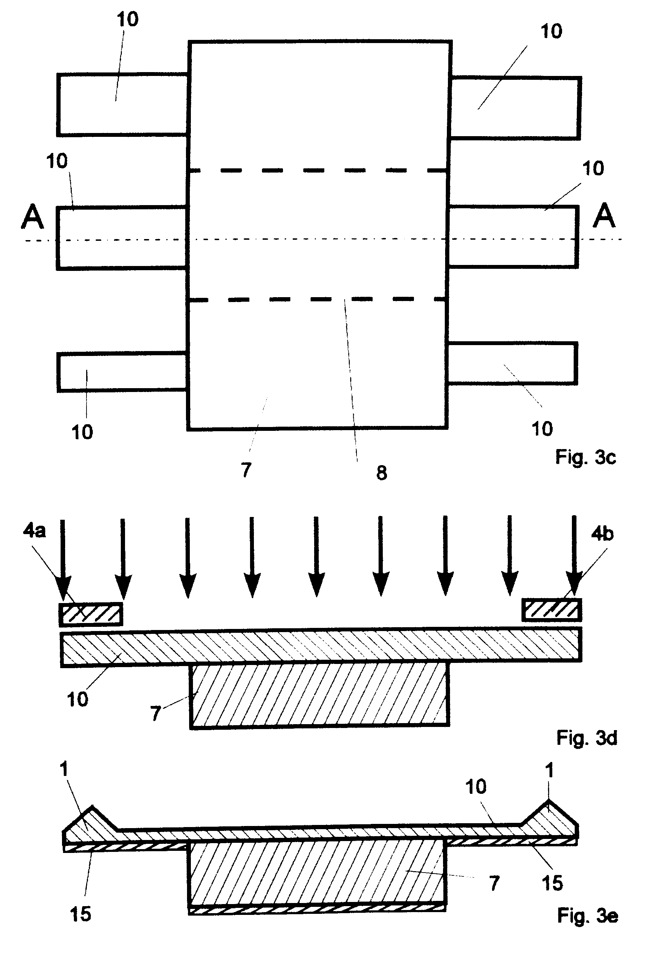

Nach der Belichtung, Temperung und dem Ätzvorgang liegen sechs Mikroskopbalken 10 vor, wie in der Figur 3c dargestellt ist. Halterung und Mikroskopbalken werden danach gedreht, so daß die Mikroskopbalken 10 mit ihrer Rückseite freiliegen, wo über den freien Enden der Mikroskopbalken 10 Maskenstrukuren 4a und 4b positioniert werden. Dies ist in Figur 3d dargestellt, die einen Schnitt durch Balken 10 und Halteelement 7 längs der Linie A-A in Figur 3c zeigt. Im Bereich dieser Maskenstrukturen sollen die Sensorspitzen ausgebildet werden. Nach Belichtung, Temperung und Ätzvorgang werden die Sensorspitzen 1 ausgebildet (s. Figur 3e), wobei gleichzeitig eine Verringerung der Dicke der Mikroskopbalken 10 vorgenommen wird. Dementsprechend ist der Ätzvorgang zeitlich gezielt zu steuern. Auf den Mikroskopbalken 10 ist zusätzlich noch eine reflektierende Beschichtung 15 aufgebracht, die auch gleichzeitig beim Ätzen der Spitze die Rückseite des Mikroskopbalkens schützt.

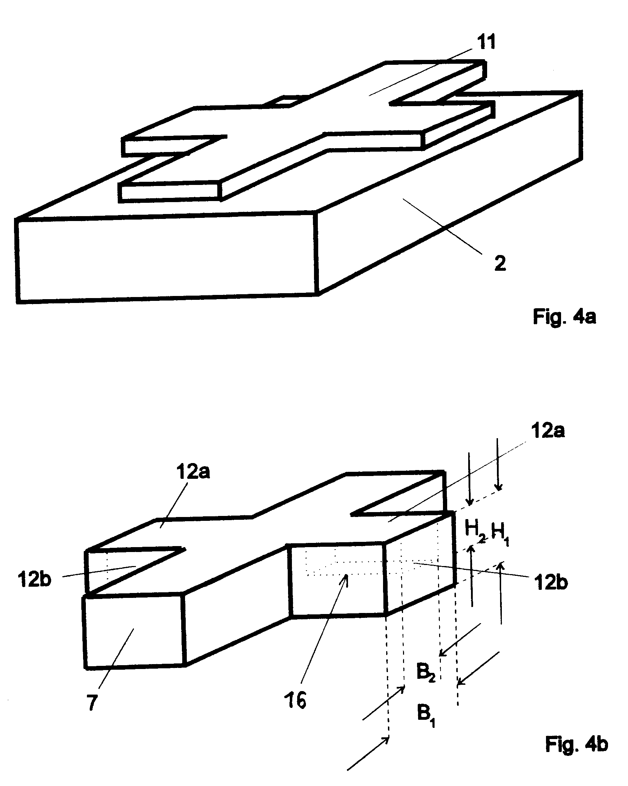

Die monolithische Herstellung von Halteelement, Mikroskopbalken und Sensorspitze ist in den Figuren 4a bis 4e dargestellt. In perspektivischer Darstellung ist in der Figur 4a ein Plättchen 2 aus photostrukturierbarem Glas zu sehen, über dessen Oberseite eine kreuzförmige Maskenstruktur 11 aufgebracht ist. Nach Belichtung, Temperung und Ätzvorgang liegt die in Figur 4b perspektivisch dargestellte Struktur vor, wobei das Mittelteil als Halteelement 7 dienen soll und die beiden Ansätze 12a bzw. 12b Vorstufen der noch auszubildenden Mikroskopbalken darstellen.

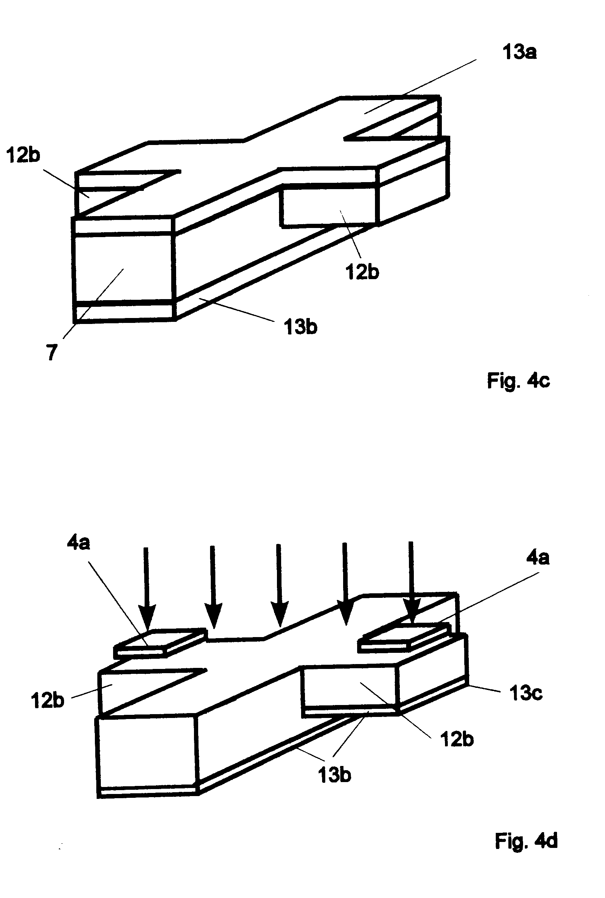

Diese Struktur wird, wie in der Figur 4c dargestellt, von oben vollständig und von unten im Bereich des Halteelementes 7 unter Benutzung einer geeigneten Maske mit Schichten 13a, 13b abgedeckt. Das kann z.B. mit einem Photolack oder durch Beschichtung mit Siliziumnitrid geschehen. Die so präparierte Struktur wird dann ohne vorherige Belichtung isotrop geätzt, bis die gewünschte Dicke für die Herstellung des Balkens und der Spitze verbleibt. In der Figur 4b wird dies durch die Abmessungen $H_2$ und $B_2$ des Ansatzes 12b verdeutlicht. Bei diesem isotropen Ätzprozeß wird gleichzeitig erreicht, daß die Rückseite 1b des Ansatzes 12b und damit des späteren Balkens glatt bleibt, was für die Gewährleistung einer spiegelnden Reflexion für den Laserstrahl in einem Kraftmikroskop von entscheidender Bedeutung ist.

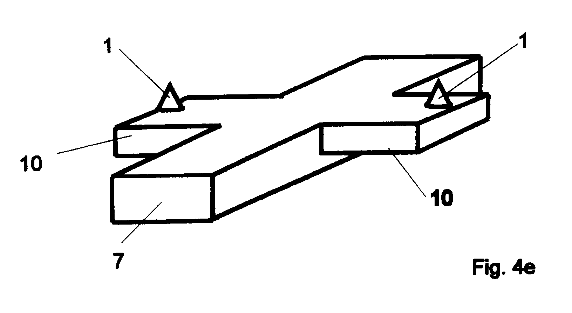

In einem weiteren Schritt werden die Spitzen und gleichzeitig die endgültige Geometrie der Balken erzeugt. Dazu wird die Rückseite der Struktur ganzflächig, z.B. durch Beschichtung 13b mit Siliziumnitrid (Fig. 4d) passiviert. Die Vorderseite wird nur an den Stellen der künftigen Spitzen durch Positionierung einer Maske mit den Strukturen 4a und 4b abgeschattet. Nach Belichtung, Temperung und Ätzen entsteht die gewünschte Form der Spitzen 1 und der Balken 10, was in Fig. 4e dargestellt ist. Bei diesem Vorgang sind nicht nur die Höhe $H_2$ der Ansätze 12b sondern auch die Stärke des Halteelementes 7 verringert und auf das gewünschte Endmaß gebracht. Die Ausgangsmaße der Struktur in Figur 4b ($H_1$ und $B_1$) müsen so bemessen werden, daß nach Abschluß der Ätzprozesse die gewünschten Endmaße entstehen.

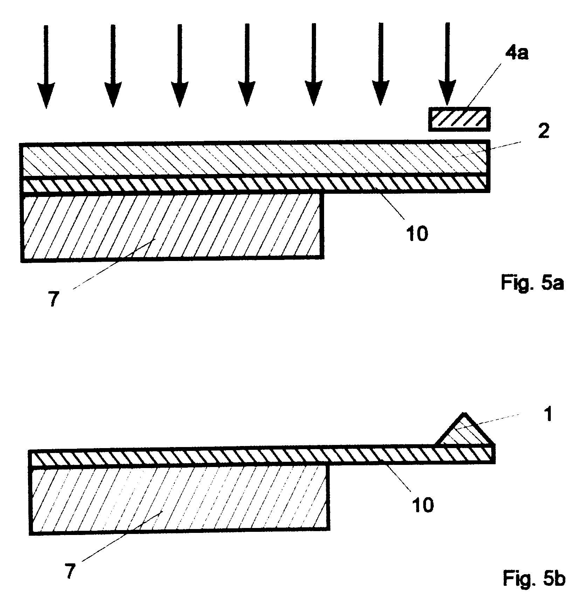

In den Figuren 5a und 5b wird die Fertigung einer Abtastvorrichtung mit einem Siliziumnitridbalken beschrieben. Zunächst wird auf ein Plättchen 2 aus photostrukturierbarem Glas eine Siliziumnitridschicht 10 aufgebracht, deren Dicke dem späteren Mikroskopbalken 10 entspricht. Die laterale Strukturierung erfolgt mit bekannten Verfahren, z.B. durch Photolithographie und Trockenätzen. Auf der Unterseite der Siliziumnitridschicht 10 wird das Halteelement 7 aufgebracht und anschließend im Bereich, wo die Sensorspitze 1 ausgebildet werden soll, eine Maske aufgelegt und die Belichtung und Temperung sowie der anschließende Ätzvorgang durchgeführt. Es liegt dann eine Abtastvorrichtung mit einem Siliziumnitridbalken vor, wie in der Figur 5b gezeigt ist. Bei diesem Hybridsystem werden die bekannten guten mechanischen Eigenschaften solcher Siliziumnitridbalken genutzt und gleichzeitig wesentlich schlankere und längere Spitzen erzeugt als in der Siliziumnitridtechnik möglich ist. Die Dicke solcher Siliziumnitridbalken liegt typischerweise bei 0,3 bis 1 $\mu$m.

Bezugszeichen:

| 1 | Sensorspitze |
|---|---|
| 2 | Plättchen aus photostrukturierbarem Glas |
| 3 | Substrat |
| 4a,b,c,d | Maskenstrukturen |
| 5 | belichteter Bereich |
| 6 | unbelichteter Bereich |
| 7 | Halteelement |
| 8 | Trennlinien |
| 9a,b | Maskenstrukturen |
| 10 | Mikroskopbalken |
| 11 | Maskenstrukturen |
| 12a,b | Ansätze |
| 13 | Lackbeschichtung |
| 14 | Siliziumnitridbeschichtung |
| 15 | reflektierende Beschichtung |
| 16 | Rückseite |

**Patentansprüche**

1. Abtastvorrichtung zur Untersuchung von Oberflächenstrukturen mit Auflösung im submicron-Bereich mit einer auf einem Trägerelement befindlichen Sensorspitze,
dadurch gekennzeichnet,
daß mindestens die Sensorspitze (1) aus photostrukturierbarem Glas besteht.

2. Abtastvorrichtung nach Anspruch 1, dadurch gekennzeichnet, daß die Sensorspitze (1) ein Aspektverhältnis von 20:1 bei einer Länge L von bis zu 500 $\mu$m aufweist.

3. Abtastvorrichtung nach Anspruch 1 oder 2, für die Kraftmikroskopie mit mindestens einem Mikroskopbalken als Trägerelement, der an mindestens einem Ende eine senkrecht zur Balkenachse angeordnete Sensorspitze trägt und der mit einem Halteelement verbunden ist, dadurch gekennzeichnet,
daß der Mikroskopbalken (10) ebenfalls aus photostrukturierbarem Glas besteht.

4. Abtastvorrichtung nach Anspruch 3, dadurch gekennzeichnet, daß die Sensorspitze (1) und der Mikroskopbalken (10) einstückig ausgebildet sind.

5. Abtastvorrichtung nach Anspruch 1 oder 2 für die Kraftmikroskopie mit mindestens einem Mikroskopbalken als Trägerelement, der an mindestens einem Ende eine senkrecht zur Balkenachse angeordnete Sensorspitze trägt und mit einem Halteelement verbunden ist, dadurch gekennzeichnet,
daß der Mikroskopbalken (10) aus Siliziumni-

trid, $SiO_2$ oder SiC besteht.

6. Abtastvorrichtung nach Anspruch 5, dadurch gekennzeichnet, daß das Halteelement durch Bonden oder Kleben am Mikroskopbalken (10) befestigt ist.

7. Abtastvorrichtung nach Anspruch 3 oder 4, dadurch gekennzeichnet, daß das Halteelement (7) aus photostrukturierbarem Glas besteht.

8. Abtastvorrichtung nach Anspruch 7, dadurch gekennzeichnet, daß die Sensorspitze (1), der Mikroskopbalken (10) und das Halteelement (7) einstückig ausgebildet sind.

9. Abtastvorrichtung nach einem der Ansprüche 3 bis 8, dadurch gekennzeichnet, daß der Mikroskopbalken (10) mindestens auf seiner Rückseite mit einer reflektierenden Beschichtung (15) versehen ist.

10. Verfahren zur Herstellung einer Abtastvorrichtung nach einem der Ansprüche 1 bis 9, dadurch gekennzeichnet,
daß ein Plättchen aus photostrukturierbarem Glas mit einer Dicke größer oder gleich der Länge L einer Sensorspitze verwendet wird,
daß das photostrukturierbare Glas mittels mindestens einer Maske an mindestens einem vorgegebenen Oberflächenbereich, wo die Sensorspitze ausgebildet werden soll, abgedeckt wird,
daß das photostrukturierbare Glas in den nicht abgedeckten Bereichen belichtet und anschließend insgesamt getempert wird, und
daß der belichtete Bereich zumindest unter Ausbildung der Sensorspitze geätzt wird.

11. Verfahren nach Anspruch 10, dadurch gekennzeichnet, daß die Ätzrate auf das gewünschte Aspektverhältnis der fertigen Sensorspitze eingestellt wird.

12. Verfahren nach einem der Ansprüche 10 oder 11, dadurch gekennzeichnet,
daß das Plättchen vor der Photostrukturierung mit einem Halteelement derart verbunden wird,
daß das Plättchen gegenüber dem Halteelement um mindestens die Länge eines auszubildenden Mikroskopbalkens vorsteht,
daß durch Photostrukturierung, Tempern und Ätzen der Mikroskopbalken mit der gewünschten Breite in den freiliegenden Bereichen des Plättchens hergestellt wird (erste Strukturierung) und
daß dann am freien Ende des Mikroskopbalkens durch Photostrukturierung und Ätzen unter gleichzeitiger Verringerung der Balkenhöhe die Sensorspitze ausgebildet wird (zweite Strukturierung).

13. Verfahren nach Anspruch 12, dadurch gekennzeichnet, daß die erste Strukturierung ausgehend von der Oberseite und die zweite Strukturierung ausgehend von der Unterseite des Plättchens vorgenommen wird.

14. Verfahren nach Anspruch 12 oder 13, dadurch gekennzeichnet, daß das Plättchen mit dem Halteelement durch Bonden oder Kleben verbunden wird.

15. Verfahren nach einem der Ansprüche 10 bis 14, dadurch gekennzeichnet, daß aus einem Plättchen gleichzeitig mehrere Balken mit gleicher oder unterschiedlicher Geometrie gefertigt werden.

16. Verfahren nach Anspruch 15, dadurch gekennzeichnet, daß ein Halteelement mit vorgegebenen Trennlinien verwendet wird, die nach Abschluß der Photostrukturierung zur Vereinzelung durchtrennt werden.

17. Verfahren nach Anspruch 10 oder 11, dadurch gekennzeichnet,
daß ein Plättchen aus photostrukturierbarem Glas mit einer Dicke größer oder gleich der Dicke des Halteelementes plus Sensorspitze verwendet wird,
daß durch Photostrukturierung, Tempern und Ätzen der Mikroskopbalken mit der gewünschen Breite hergestellt wird,
daß durch weiteres Ätzen lediglich des Mikroskopbalkens dessen Höhe und Breite verringert werden, und
daß anschließend durch Photostrukturierung, Tempern und Ätzen die Sensorspitze ausgebildet wird.

18. Verfahren nach Anspruch 17, dadurch gekennzeichnet, daß die Photostrukturierung zur Ausbildung der Sensorspitze von der Rückseite des Mikroskopbalkens erfolgt und daß während des Ätzens die Vorderseite des Mikroskopbalkens abgedeckt ist.

19. Verfahren nach Anspruch 10 oder 11, dadurch gekennzeichnet,
daß zunächst auf das Plättchen aus photostrukturierbarem Glas eine Schicht aus Siliziumnitrid, $SiO_2$ oder SiC in Form eines Mikroskopbalkens hergestellt wird, deren Dicke auf die gewünschte Federkonstante des Mikroskopbalkens abgestimmt ist,

daß danach auf diese Schicht das Haltelement aufgebracht wird und

daß dann durch Photostrukturierung und Ätzen die Sensorspitze gefertigt wird.

20. Verfahren nach Anspruch 19, dadurch gekennzeichnet, daß der Ätzvorgang bis zum Erreichen der Schicht aus Siliziumnitrid, $SiO_2$ oder SiC durchgeführt wird.

21. Verfahren nach einem der Ansprüche 10 bis 20, dadurch gekennzeichnet, daß die von der jeweiligen Ätzung auszunehmenden Oberflächen durch eine Beschichtung wie Photolack oder Siliziumnitrid geschützt werden.

22. Verfahren nach einem der Ansprüche 10 bis 21, dadurch gekennzeichnet, daß die Rückseite des Mikroskopbalkens mit einer reflektierenden Beschichtung versehen wird.

Fig. 1a

Fig. 1b

Fig. 1c

Fig. 2

7

2

Fig. 3a

9a

9a

9a

9a

9a

9b

7

8

9b

9b

Fig. 3b

Fig. 3c

Fig. 3d

Fig. 3e

Fig. 4a

Fig. 4b

13a

12b

12b

13b

7

**Fig. 4c**

4a

4a

12b

13c

12b

13b

**Fig. 4d**

1

10

7

1

10

Fig. 4e

4a

2

10

**Fig. 5a**

7

1

10

7

**Fig. 5b**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| P,X | JOURNAL OF MICROMECHANICS AND MICROENGINEERING, Bd.3, Nr.4, Dezember 1993, UK Seiten 187 - 189 T.R.DIETRICH ET AL 'photoetchable glass for microsystems : tips for atomic force microscopy' --- | 1-5, 10-13, 17-21 | G01B7/34 G01N27/00 |
| Y | IBM TECHNICAL DISCLOSURE BULLETIN., Bd.30, Nr.5, Oktober 1987, NEW YORK US Seiten 369 - 370 'optically transparent tip for tunneling microscopy' * Seite 370, Absatz 1 -Absatz 2 * --- | 1,3,4,10 | |
| Y | US-A-4 898 557 (J.ENGEMANN) * Spalte 3, Zeile 38 - Spalte 4, Zeile 22 * --- | 1,3,4,10 | |
| A | EP-A-0 383 182 (OLYMPUS OPTICAL CO LTD) * Spalte 4, Zeile 26 - Spalte 9, Zeile 14; Abbildungen 1-4 * --- | 1,10 | RECHERCHIERTE SACHGEBIETE (Int.Cl.5) |
| A | EP-A-0 483 579 (IBM CORP) * das ganze Dokument * --- | 1,2 | G01B G01N |
| D,A | REVIEW OF SCIENTIFIC INSTRUMENTS., Bd.63, Nr.6, Juni 1992, NEW YORK US Seiten 3330 - 3322 H.KADO ET AL 'ATOMIC FORCE MICROSCOPY USING ZNO WHISKER TIP' --- -/-- | 1 | |

Der vorliegende Recherchenbericht wurde für alle Patentansprüche erstellt

| Recherchenort | Abschlußdatum der Recherche | Prüfer |
|---|---|---|
| DEN HAAG | 17. August 1994 | Brock, T |

**Europäisches Patentamt**

**EUROPÄISCHER RECHERCHENBERICHT**

Nummer der Anmeldung

EP 94 10 6549

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| D,A | JOURNAL OF VACUUM SCIENCE AND TECHNOLOGY: PART A., Bd.8, Nr.1, Januar 1990, NEW YORK US Seiten 429 - 433 Y.AKAMA ET AL 'NEW SCANNING TUNNELING MICROSCOPY TIP FOR MEASURING SURFACE TOPOGRAPHY' --- | 1 | |
| D,A | JOURNAL OF VACUUM SCIENCE AND TECHNOLOGY: PART A., Bd.8, Nr.4, Juli 1990, NEW YORK US Seiten 3386 - 3396 T.R.ALBRECHT ET AL 'MICROFABRICATION OF CANTILEVER STYLI FOR THE ATOMIC FORCE MICROSCOPE' --- | 1 | |
| D,A | EP-A-0 413 040 (IBM CORP) ----- | 1 | |

**RECHERCHIERTE SACHGEBIETE (Int.Cl.5)**

Der vorliegende Recherchenbericht wurde für alle Patentansprüche erstellt

| Recherchenort | Abschlußdatum der Recherche | Prüfer |
|---|---|---|
| DEN HAAG | 17. August 1994 | Brock, T |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
............................................................
& : Mitglied der gleichen Patentfamilie, übereinstimmendes Dokument

EPO FORM 1503 03.82 (P04C03)